# EUROPEAN PATENT SPECIFICATION

(11) **EP 1 721 691 B1**
(45) Date of publication and mention of the grant of the patent: **23.04.2008**
(21) Application number: 05425313.3
(22) Date of filing: 12.05.2005
(51) Int. Cl.: B23B 31/30, B23B 31/26

(54) **Chuck locking device for machine tools**
Klemmsperre des Futters für Werkzeugmaschinen
Dispositif de blocage du mandrin pour machines-outils

(43) Date of publication of application: 15.11.2006
(73) Proprietor: Ferraro, Antonio, 20123 Milano MI (IT)
(72) Inventor: Ferraro, Antonio, 20123 Milano MI (IT)
(74) Representative: Concone, Emanuele

(56) References cited:
- EP-A- 0 237 497
- EP-A- 1 044 748
- EP-A- 1 468 767
- DE-A1- 10 319 796
- US-A- 4 726 269
- US-A- 4 915 553
- US-A- 4 932 295
- US-A- 5 022 278
- US-A- 5 662 442
- PATENT ABSTRACTS OF JAPAN vol. 016, no. 217 (M-1252), 21 May 1992 (1992-05-21) & JP 04 041108 A (NIPPONDENSO CO LTD), 12 February 1992 (1992-02-12)

## Description

The present invention relates to a chuck locking device for machine tools according to the preamble of claim 1.

It is known that a chuck is a device, usually connected to the spindle of a machine tool, by which it is possible to grip the outside of a rotating workpiece or tool. There are various types of chuck, and the present application specifically relates to the type of chuck disclosed in patent EP 0 237 497 B1 in the name of the same applicant, over which this application is an improvement. Therefore, reference is made to the above-mentioned patent for a detailed description of the operation of this type of chuck, whereas this description concentrates on the novel aspects of the new version of the locking device.

In brief, the locking device includes an axially mobile member slidable within an axially stationary member, and an expander axially slidable within said mobile member and suitable to push three wedging bodies (usually balls) radially outwards against an abutment surface of said stationary member, through proper apertures formed in the mobile member. The device is driven into the locking position by a spring system, whereas the unlocking is carried out by a hydraulic system that overcomes the force of the springs. Specific reference will be made hereafter to spherical wedging bodies, being it clear that what is said also applies with proper changes to cylindrical wedging bodies as explained in the above-mentioned patent.

This known device is quite safe and effective, and still in use after almost twenty years, yet it is not free from drawbacks. In particular, the locking force of the device depends on the exact position taken by the holding cone, i.e. the member that holds the workpiece or the tool that is secured in the chuck. In fact, due to the manufacturing tolerances of the items secured therein, the chuck will not always be locked at the same position.

The problem is that the little differences in the locking position caused by said tolerances correspond to great differences in the position reached by the expander. For example, in the case of ball races formed on the external surface of the expander with a 3° slope and an abutment surface formed on the stationary member with a 45° inclination, an axial position difference of 0,05 mm in the locking position corresponds to a difference of 1 mm in the expander position, i.e. the difference is amplified by 20 times.

The first consequence of said difference is that the spring system is more or less compressed, and the resulting locking force changes greatly according to the tolerances of the item secured in the chuck, reaching a variation of ±40%. Therefore, it is not possible to give a precise locking force of the device, but just an average value and/or a value range.

The second consequence of said difference is that the items secured in the chuck must meet certain tolerances, since the limited length of the expander allows to compensate only for a certain range of differences (e.g. ±0,25 mm corresponding to ±5 mm in the previous example).

Another drawback of the conventional races disclosed in EP 0 237 497 B1 is that the load of the balls often tends to concentrate in the central region of the races due to irregularities in the shape thereof, usually caused by the wear of the tool used to form the races. This load concentration implies poor lubrification, difficult rolling, wear of the balls and risks of seizure.

Therefore the object of the present invention is to provide a device which overcomes said drawbacks. This object is achieved by means of a device according to claim 1, in which the expander races have a central longitudinal groove formed in the bottom of the races, that have a longitudinal profile with increasing slope from the distal end towards the proximal end. Other advantageous features of the present device are disclosed in the dependent claims.

The main advantage of said device is that the presence of the central longitudinal groove assures a more uniform distribution of the load and a better lubrification. This results in less wear, less play, more reliability and a higher speed in driving the device.

Another advantage stemming from the smoother operation of the device is the possibility to use a less strong and therefore more compact spring system.

A further advantage of the device is that the locking force is almost constant regardless of the chuck locking position, i.e. of the position along the races reached by the balls.

In fact, in the case of chuck locking at a rearward position, which corresponds to a lower compression of the springs and therefore a lower locking force, said force is applied to the balls with a maximum radial component since the balls are close to the distal end of the expander where the race slope is lowest. On the contrary, if the chuck is locked at a forward position the correspondingly higher locking force is applied to the balls with a lower radial component, since the balls are close to the proximal end of the expander where the race slope is higher.

Given that only the radial component of the force contributes to the locking, the axial component being ineffective to said purpose, the result is that by means of the slope change along the races the two opposite effects of increase in force value upon decrease in radial component (and vice versa) substantially make up for each other. As a consequence, the resulting locking force at the different positions is much more uniform than in the known device where the expander races have a constant slope.

Still another significant advantage of such a device is the greater capacity of compensating for the manufacturing tolerances of the items secured in the chuck.

Also this capacity stems from the increase in slope of the races in the proximal region of the expander, which corresponds to a decrease in the effect of amplification of the expander displacement mentioned in the introductory portion. In other words, a same difference in the axial locking position corresponds to a smaller difference in the position of the expander, therefore with the same expander length it is possible to increase by even 100% the tolerance range that can be compensated for or the same tolerance range can be compensated for by a shorter expander.

These and other advantages and characteristics of the device according to the present invention will be clear to those skilled in the art from the following detailed description of an embodiment thereof, with reference to the annexed drawings wherein:
Fig.1 is a diagrammatic longitudinal sectional view of the locking device at the minimum working position;
Fig.2 is a diagrammatic longitudinal sectional view of the locking device at an intermediate working position;
Fig.3 is a diagrammatic longitudinal sectional view of the locking device at the maximum working position; and
Fig.4 is a diagrammatic longitudinal sectional view of the locking device at the rest position, i.e. with the chuck unlocked.

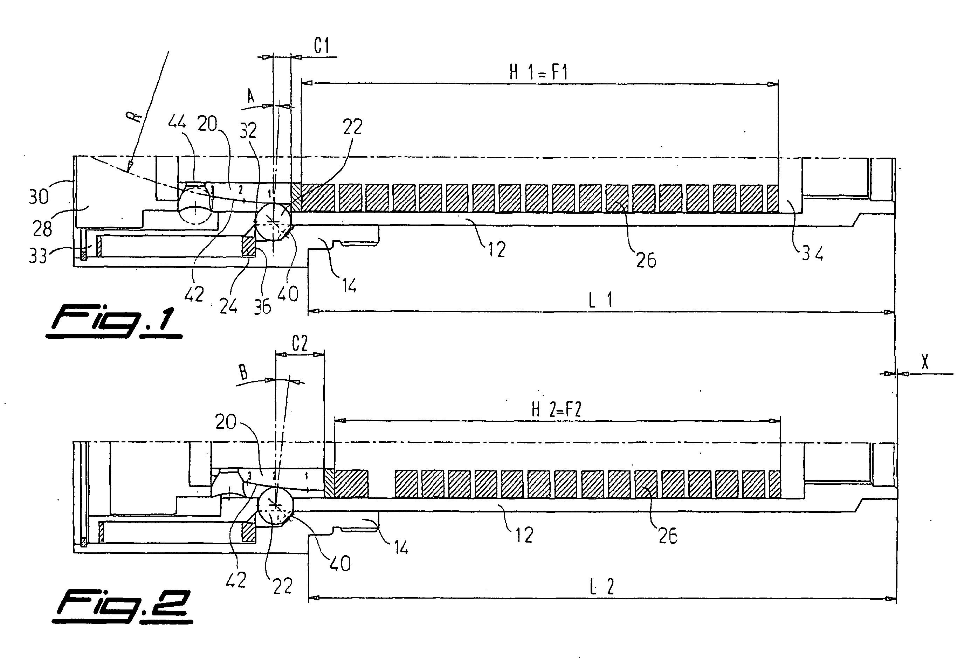

With reference to fig. 1, there is seen that the device according to the present invention conventionally includes an axially mobile member 12 slidable within an axially stationary member 14, and an expander 20 axially slidable within said mobile member 12 and suitable to push three wedging bodies 22 of spherical shape radially outwards against an abutment surface 40 of said stationary member 14, through proper apertures 32 formed in the mobile member 12.

The device is driven into the locking position by a spring system made up of a pair of springs 24 and 26, preferably coil springs, whereas the unlocking is carried out by a hydraulic system that by feeding pressurized fluid into a chamber 30 pushes forward an unlocking piston 28 so as to overcome the force of said springs.

More specifically, spring 24 is arranged inside the stationary member 14 between a distal shoulder 36 and a flange 33 formed at the proximal end of the mobile member 12, whereas spring 26 is arranged inside the mobile member 12 between a distal shoulder 34 and the distal end of expander 20.

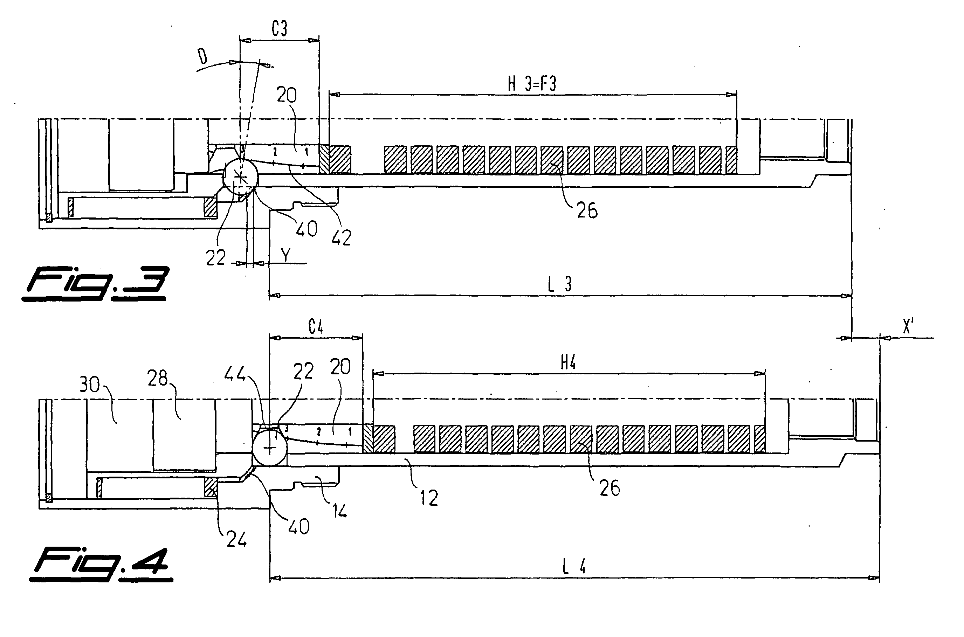

On the external surface of expander 20 there are formed the races 42 for the rolling of balls 22. These races 42 terminate at the proximal end into recesses 44 suitable to receive balls 22, so that the latter do not project from the external surface of the mobile member 12 when the device is at the rest position (fig.4).

The novel aspect of the present invention is a central longitudinal groove (not visible in the figures) formed in the bottom of races 42, whose longitudinal profile has an increasing slope from the distal end towards the proximal end, preferably along a constant radius of curvature R. This radius R is calculated so that the slope of races 42 progressively increases from about 2,5° to about 7°, the upper value being defined by the irreversibility limit of the device resulting from the angle of friction beyond which sliding of balls 22 occurs.

The advantages achieved through said central longitudinal groove and said increasing slope profile are evident from the preceding description and from the different working conditions illustrated in the figures.

Fig.4 shows the device at the rest position, i.e. unlocked and ready for the chuck locking. As previously mentioned, in this condition balls 22 do not project from the mobile member 12 since they are received in recesses 44 that are at the distal cylindrical portion of the stationary member 14, just forward of the abutment surface 40.

The device is kept at this position by the pressure of the fluid inside chamber 30, that pushes piston 28 to overcome the force of springs 24, 26. The mobile member 12 is at the position of maximum extension L4, spring 26 is in the condition of maximum compression H4 and balls 22 are at the maximum distance C4 from the distal end of expander 20.

To drive the device into the locking position, it is sufficient to cut the pressure to chamber 30 so that piston 28 is no longer pushed and shifts backwards under the action of the spring system. Also expander 20 shifts with piston 28, and balls 22 come out of recesses 44 wedging between races 42 and the abutment surface 40.

Fig.3 shows the device at the maximum working position, where balls 22 have made the minimum radial movement and the mobile member 12 the minimum axial movement X'=L4-L3. In this condition, balls 22 are at the maximum working distance C3 from the distal end of expander 20 and abut against surface 40 at the distal edge of the locking length Y.

Since this position corresponds to the minimum extension H3 of spring 26 in the locking condition, the force F3 exerted by the spring is greatest but said force is applied to balls 22 that are in the region of races 42 where the slope is greatest as indicated by angle D (obviously, the values of the angles in the drawings are exaggerated for the sake of clarity).

Similarly, fig.2 shows the chuck locking condition at a more rearward position with the mobile member 12 extended through a length L2<L3, and balls 22 at a distance C2 from the distal end of expander 20 in an intermediate position along races 42. This position corresponds to an extension H2>H3 of spring 26, whereby the spring exerts a force F2<F3 but said force is applied to balls 22 with a greater radial component since balls 22 are in a region of races 42 where the slope is lower as indicated by angle B<D.

By the same token, fig.1 shows the device at the minimum working position, where balls 22 have made the maximum radial movement, are at the minimum working distance C1 from the distal end of expander 20 and abut against surface 40 at the proximal edge of the locking length Y.

Since this position corresponds to the maximum extension H1 of spring 26, the force F1 exerted by the spring is lowest but said force is applied to balls 22 with the maximum radial component, since balls 22 are in the region of races 42 where the slope is lowest as indicated by angle A<B.

It should be noted that the comparison between figures 1 and 2 makes evident how a very small axial displacement of the mobile member 12, namely X=L2-L1, corresponds to an axial displacement C2-C1 of expander 20 that is many times greater.

It is clear that the above-described and illustrated embodiment of the device according to the invention is just an example susceptible of various modifications without departing from the scope of the invention as hereinafter claimed. In particular, the range of slope values of races 42 can be different from the one mentioned above, and the different slopes can also result from a plurality of short lengths with constant slope radiused to each other, or from lengths with different radiuses of curvature radiused to each other.

## Claims

1. Chuck locking device for machine tools, including an axially mobile member (12) slidable within an axially stationary member (14), and an expander (20) axially slidable within said mobile member (12) and suitable to push three wedging bodies (22) radially outwards against an abutment surface (40) of said stationary member (14) through proper apertures (32) formed in the mobile member (12), said wedging bodies (22) rolling along races (42) formed on the external surface of said expander (20), said races (42) of the expander (20) having a longitudinal profile with increasing slope from the distal end towards the proximal end, **characterized in that** a central longitudinal groove is formed in the bottom of said races (42).

2. Chuck locking device according to claim 1, **characterized in that** the slope of the races (42) progressively increases along a constant radius of curvature (R).

3. Chuck locking device according to one of the preceding claims, **characterized in that** the slope of the races (42) is included in the range from 2,5° to 7°.

## Patentansprüche

1. Spannfutterverriegelungsvorrichtung für Werkzeugmaschinen, enthaltend ein axial mobiles bzw. bewegliches Glied (12), das innerhalb eines axial stationären Glieds (14) verschiebbar bzw. gleitbar ist, und eine Expansions- bzw. Aufweiteinrichtung (20), die axial innerhalb des mobilen Glieds (12) verschiebbar bzw. gleitbar ist und geeignet ist, drei Verkeilungskörper (22) radial nach außen gegen eine Anschlagfläche bzw. -oberfläche (40) des stationären Glieds (14) durch passende bzw. geeignete Öffnungen (32) zu drücken, die in dem mobilen Glied (12) ausgebildet sind, wobei die Verkeilungskörper (22) entlang Bahnen (42) rollen, die an der externen Oberfläche bzw. Fläche der Aufweiteinrichtung (20) gebildet sind, wobei die Bahnen (42) der Aufweiteinrichtung (20) ein Längsprofil mit zunehmender Schrägung bzw. Neigung von dem distalen Ende zu dem proximalen Ende hin aufweisen, **dadurch gekennzeichnet, dass** eine zentrale Längsnut bzw. -rille in dem Boden der Bahnen (42) gebildet ist.

2. Spannfutterverriegelungsvorrichtung nach Anspruch 1, **dadurch gekennzeichnet, dass** die Neigung der Bahnen (42) progressiv entlang einem konstanten Krümmungsradius (R) zunimmt.

3. Spannfutterverriegelungsvorrichtung nach einem der vorhergehenden Ansprüche, **dadurch gekennzeichnet, dass** die Neigung der Bahnen (42) in dem Bereich von 2,5° bis 7° liegt.

## Revendications

1. Dispositif de blocage de mandrin pour machines-outils, comprenant un élément mobile dans le sens axial (12) pouvant coulisser dans un élément stationnaire dans le sens axial (14), et un mandrin expansible (20) pouvant coulisser axialement dans ledit élément mobile (12) et adapté pour pousser trois corps de calage (22) radialement vers l'extérieur contre une surface de butée (40) dudit élément stationnaire (14) à travers des ouvertures appropriées (32) formées dans l'élément mobile (12), lesdits corps de calage (22) roulant le long de chemins de roulement (42) formés sur la surface externe dudit mandrin expansible (20), lesdits chemins de roulement (42) du mandrin expansible (20) ayant un profil longitudinal avec une inclinaison augmentant de l'extrémité distale vers l'extrémité proximale, **caractérisé en ce qu'**une rainure longitudinale centrale est formée dans le fond desdits chemins de roulement (42).

2. Dispositif de blocage de mandrin selon la revendication 1, **caractérisé en ce que** l'inclinaison des chemins de roulement (42) augmente progressivement le long d'un rayon constant de courbure (R).

3. Dispositif de blocage de mandrin selon l'une quelconque des revendications précédentes, **caractérisé en ce que** l'inclinaison des chemins de roulement (42) est comprise dans la gamme de 2,5° à 7°.
